Europäisches Patentamt

European Patent Office

Office européen des brevets

(19)

(11) **EP 1 061 253 B1**

(12) **EUROPÄISCHE PATENTSCHRIFT**

(45) Veröffentlichungstag und Bekanntmachung des Hinweises auf die Patenterteilung:
**18.08.2004 Patentblatt 2004/34**

(51) Int Cl.⁷: **F02M 61/08**, F16K 1/42, F02M 61/18, F16K 1/38

(21) Anmeldenummer: **00112709.1**

(22) Anmeldetag: **15.06.2000**

(54) **Tellerventil zur Dosierung von Flüssigkeiten**

Poppet valve for metering liquids

Soupape à champignon pour doser les fluides

(84) Benannte Vertragsstaaten:
**DE FR GB IT**

(30) Priorität: **18.06.1999 US 336332**

(43) Veröffentlichungstag der Anmeldung:
**20.12.2000 Patentblatt 2000/51**

(73) Patentinhaber: SIEMENS
AKTIENGESELLSCHAFT
**80333 München (DE)**

(72) Erfinder:
• **Gottlieb, Bernhard, Dr.**
**81739 München (DE)**

• **Mock, Randolf, Dr.**
**81739 München (DE)**
• **Meixner, Hans, Prof.**
**85540 Haar (DE)**
• **Kappel, Andreas, Dr.**
**85649 Brunnthal (DE)**
• **Fischer, Bernhard**
**84513 Töging am Inn (DE)**
• **Shen, Jingming, James**
**Neport News, VA 23608 (US)**

(56) Entgegenhaltungen:
EP-A- 0 651 154          WO-A-93/04277
DE-A- 19 606 087

**Beschreibung**

Die Erfindung betrifft ein Tellerventil, das durch korrespondierende Flächen auf einem Ventilsitz des Ventilgehäuses und auf dem Teller der mit einer Ventilnadel verbunden ist, abgedichtet wird. Ein Hub der Ventilnadel öffnet das Ventil und gibt einen Dichtungsspalt frei, der in der Regel radialsymmetrisch, insbesondere kegelstumpfförmig ausgebildet sein kann. Die Geometrie der Strömung im Dichtungsspalt und nach dem Verlassen des Ventils bestimmt maßgebend das weitere Erscheinungsbild der Flüssigkeit.

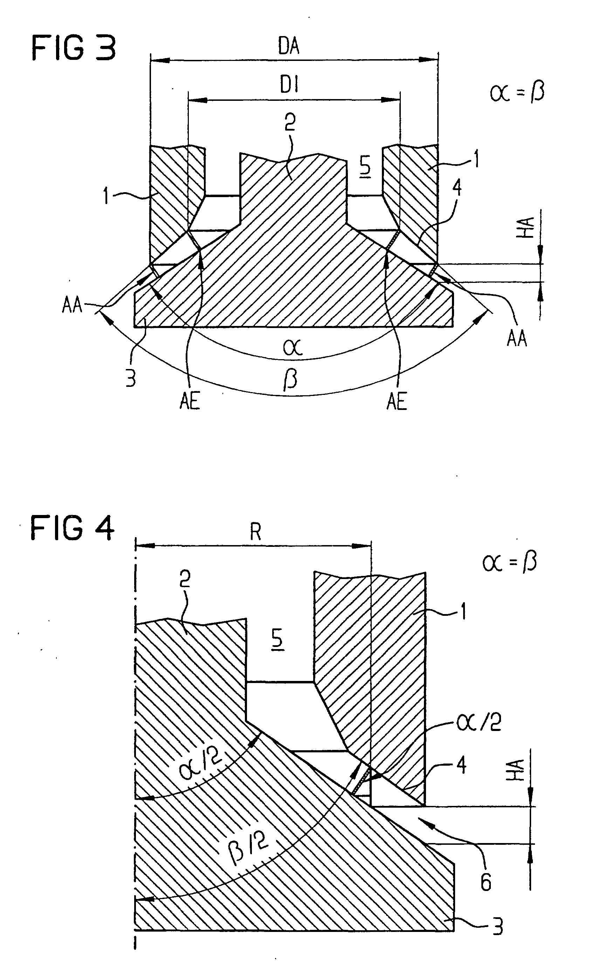

In den Figuren 3 und 4 wird ein typisches Tellerventil im axialen Schnitt nach dem Stand der Technik dargestellt. Dieses Ventil dient zur Erzeugung eines Flüssigkeitskegelstrahles. Die Flüssigkeit strömt dabei zunächst axial im Ringspalt 5 zwischen einer Ventilnadel 2 und dem Ventilkörper 1 von oben nach unten in Richtung auf den Ventilteller 3 und wird in Richtung auf einen in dem Ventilkörper 1 eingearbeiteten Ventilsitz 4 umgelenkt. Bei geöffnetem Ventil verläßt somit die Flüssigkeit den Ventilspalt, der im weiteren auch als Dichtungsspalt bezeichnet wird, der sich zwischen Ventilteller 3 und Ventilsitz 4 befindet in Form eines Kegelstrahles. Dieser Kegelstrahl weist einen durch Ventilteller 3 und Ventilsitz 4 aufgeprägten Kegelwinkel $\alpha$ auf.

Bisher übliche Kegelwinkel $\alpha$ der Tellerdichtfläche und Kegelwinkel $\beta$ der Ventilsitzfläche zur Erzeugung einer flüssigkeitsdichten Einheit wurden gleich groß gewählt ($\alpha = \beta$). Dabei tritt regelmäßig das Problem auf, daß der kegelstumpfförmige Strömungsquerschnitt im Dichtungsspalt 6 bei geöffnetem Ventil linear mit dem Radius anwächst (DI<2R<DA, mit DI = Innendurchmesser des Dichtungsspaltes 6 und DA = Außendurchmesser des Dichtungsspaltes 6). Die Formel für den Flächeninhalt bzw. Querschnitt A des kegelstumpfförmigen Strömungsquerschnittes im Dichtungsspalt 6 wird aus elementaren geometrischen Überlegungen hergeleitet:

$$A = \pi \cdot HA \cdot \sin(\alpha/2) \cdot (2R - 0{,}5HA \cdot \sin(\alpha))$$

mit HA = äußere Höhe des Spaltes.

Der Unterschied zwischen der äußeren Höhe HA des Spaltes 6 und der inneren Höhe HI des Spaltes 6 entspricht im Stand der Technik bei Kegelwinkel $\alpha$ = Kegelwinkel $\beta$ dem Hub, den die Ventilnadel ausführt. Mit in Kraftstoffeinspritzventilen typischen Dimensionierungen gilt:

Innendurchmesser DI = 4 mm; Außendurchmesser DA = 4,5 mm. Somit ergibt sich eine relative Änderung des minimalen Strömungsquerschnittes vom Flüssigkeitseinlauf bis zum Flüssigkeitsauslauf bezogen auf den Ventilspalt bzw. Dichtungsspalt 6, die sich berechnet nach:

$$(DA-DI)/(DI-0{,}5HA \cdot \sin(\alpha)) \approx 0{,}5/4 = 0{,}125 = 12{,}5\ \%.$$

Das Kegelstrahlventil stellt daher im geöffneten Zustand einen Diffusor dar. Ein derart starkes Anwachsen des Strömungsquerschnittes über eine derart kurze Strecke führt zu einer stark verzögerten Strömung und zu Kavitation. Derartige Kavitation ist bei Einspritzventilen mit einer wie oben beschriebenen Dichtfläche bereits experimentell beobachtet worden. Der Volumenzuwachs kann durch die Flüssigkeit selbst, deren Kompressibilität, beispielsweise bei Kraftstoff bei $\kappa = 10^{-9}$ m$^2$/N liegt, bei der Entspannung von ca. 200 bar auf 1 bar, dies entspricht 2 %, diese geometrische Aufweitung des durchströmten Querschnittes nicht ausgleichen. Somit kommt es in Verbindung mit dieser starken Druckabnahme zu Verdampfungserscheinungen und zu Kavitation.

Der Erfindung liegt die Aufgabe zugrunde, Strömungsverzögerungen, die mit Kavitation einhergehen, in einem Tellerventil zu verhindern.

Die Lösung dieser Aufgabe geschieht durch die Merkmalskombination des Anspruchs 1.

Der Erfindung liegt die Erkenntnis zugrunde, daß die Geometrie des Tellerventils derart anzupassen ist, daß der Strömungsquerschnitt im Dichtungsspalt unabhängig vom Radius ist. Dies geschieht dadurch, daß im Gegensatz zum Stand der Technik die Fläche des Ventilsitzes 4 am Ventilkörper die korrespondierende Dichtungsfläche am Ventilteller 3 nicht wie bisher parallel ausgerichtet sind. Der Kegelwinkel $\alpha$ des Ventiltellers wird größer ausgelegt als der Kegelwinkel $\beta$ des Ventilsitzes 4. Die besonderen daraus resultierenden Vorteile dieser Modifikation der Ventilsitz- und/ oder Ventiltellergeometrie vermeidet Kavitation. Darüber hinaus erfordert die nun als Liniendichtung vorliegende Abdichtung des Ventils eine geringere Schließkraft zur Abdichtung als bei einer Flächendichtung, wie sie bei paralleler Ausführung der Dichtflächen aufzuwenden war.

Vorteilhafte Ausgestaltungen der Erfindung sehen vor, daß die zu dosierende Flüssigkeit von innen nach außen strömt. Darüber hinaus ist das Tellerventil vorteilhafterweise als ein Edelstahlventil ausgelegt.

Im folgenden wird anhand von schematischen Figuren ein Ausführungsbeispiel beschrieben.

Figur 1     zeigt ein Tellerventil entsprechend der Erfindung,

Figur 2     zeigt einen Ausschnitt aus Figur 1, der den Ventilkörper 1 mit dem Ventilsitz 4 vergrößert darstellt,

Figur 3     und Figur 4 zeigen ein Tellerventil entsprechend dem Stand der Technik.

Zur Berechnung einer Querschnittsfläche A des Dichtungsspaltes gilt näherungsweise:

$$A = \pi \cdot HA \cdot \sin(\alpha/2) \cdot (2R - 0,5HA \cdot \sin(\alpha)) \approx \pi \cdot HA \cdot \sin(\alpha/2) \cdot (2R) \qquad (1)$$

Da typischerweise für Anwendungen in der Piezoinjektortechnik in der Näherungsgleichung (1) der erste Summand (2R) sehr viel größer ist als der zweite Summand (0,5 HA sin ($\alpha$)) kann dieser in guter Näherung vernachlässigt werden:

$$0,5\ HA\ \sin(\alpha)/DI < 1\ \% \qquad \text{mit } 25\ \mu m < HA < 60\ \mu m.$$

Mit Hilfe der Näherungsformel (1) und der Forderung, daß sich der Strömungsquerschnitt über die Dichtspaltbreite nicht ändern soll, wird zunächst eine Bedingung für die Dichtspalthöhe am Flüssigkeitseinlaß abgeleitet und in Folge eine Bedingung für die Kegelwinkel:

innere Querschnittsfläche AE = äußere Querschnittsfläche AA $\Rightarrow \pi \cdot HA \cdot \sin(\alpha/2) \cdot DA = \pi \cdot HI \cdot \sin(\alpha/2) \cdot DI$, wobei HI = HA·DA/DI ist.

Für HA = 30 $\mu$m, DI = 4 mm, DA = 4,5 mm ist HI = 33,75 $\mu$m und $\Delta$H = (HI-HA) = 3,75 $\mu$m.

$$\tan(\alpha/2) = (DA-DI)/(2Y0) \Rightarrow Y0 = (DA-DI)/(2\tan(\alpha/2))$$

$$Y1 = Y0 + \Delta H$$

$$Y1 = Y0 + HA(DA-DI)/DI$$

$$\tan(\beta/2) = (DA-DI)/(2\ Y1)$$

Typische Zahlenwerte im Benzininjektor sind:

HA = 30 $\mu$m, DI = 4mm; DA = 4,5 mm, $\alpha$ = 90°.

Somit ergeben sich:

HI = 33,75 $\mu$m
$\Delta$H = (HI-HA) = 3,75 $\mu$m und
Y0 = 0,25 mm und Y1 = 0,25375 mm.

Daraus ergibt sich tan($\beta$/2) = 0,25/0,25375 $\Rightarrow \beta$ = 89, 15°.

Damit Kavitation bei allen Ventilhüben mit (0<H<HA) sicher vermieden wird, muß bei DI = 4 mm und DA = 4,5 mm und $\alpha$ = 90° der Kegelwinkel $\beta$ kleiner oder gleich 89,15° sein.

Die Figuren 3 und 4 stellen Schnittzeichnungen durch ein Tellerventil dar, das nach dem Stand der Technik ausgelegt ist. Es ist erkennbar, daß der Ventilsitz 4 flächig ausgebildet ist und mit der gegenüberliegenden Fläche des Ventiltellers 3 korrespondiert. Die Fläche am Ventilteller weist den Kegelwinkel $\alpha$ auf. Die Fläche des Ventilsitzes 4 weist den Kegelwinkel $\beta$ auf, wobei beide Winkel gleich sind. Somit ist der Dichtungsspalt 6, d.h. der Spalt, der auftritt, wenn die Ventilnadel 2 einen Hub überträgt und das Ventil öffnet, gegeben durch zwei parallele Kegelflächen. Weiterhin sind mit Bezugszeichen gekennzeichnet der Radius R, der in Zusammenhang mit einer Querschnittsfläche A zu betrachten ist; die Querschnittsflächen AE am Eintritt der Flüssigkeit in den Dichtungsspalt 6 und AA am Austritt der Flüssigkeit aus dem Dichtungsspalt 6. Ein derartiges mit gleichen Kegelwinkeln ausgestattetes System wird Schäden aufgrund von Kavitation erleiden, da die Vergrößerung der Querschnittsfläche mit zunehmendem Radius die Voraussetzung für eine Kavitation schafft. In Figur 4 ist relativ zur strichpunktierten Symmetrieachse jeweils der Winkel $\alpha/2$ und $\beta/2$ eingezeichnet.

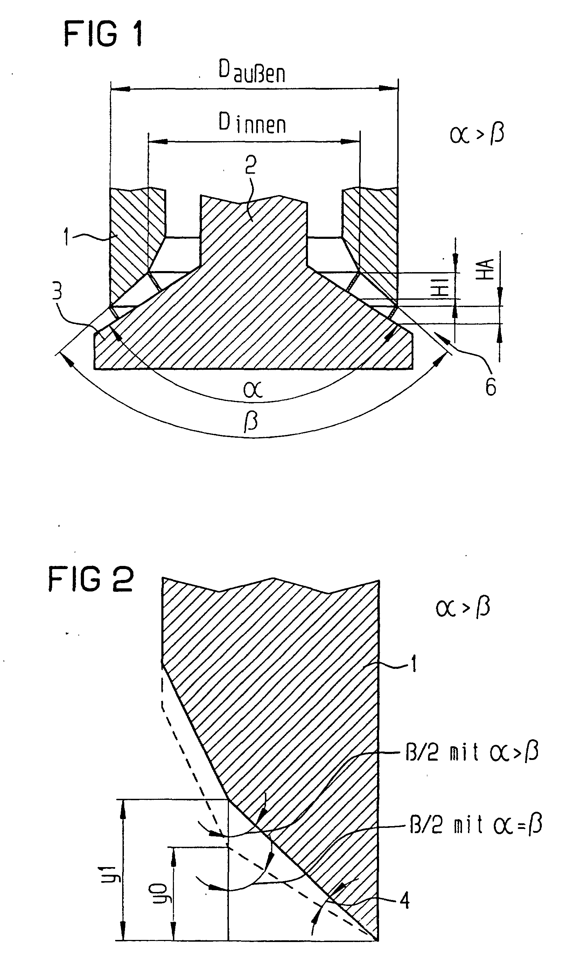

In den Figuren 1 und 2 ist ein Ausführungsbeispiel der Erfindung wiedergegeben. Entsprechend Figur 2 ist erkennbar, daß die korrespondierenden Flächen auf dem Ventilkörper 1 und auf dem Ventilteller 3 zur Darstellung der Dichtwirkung nicht mehr parallel sind. Somit wird bei geschlossenem Ventil ein linenförmiger Kontakt der dargestellten Bauteile die Dichtung bewirken. In den Figuren 1 und 2 ist der Winkel $\alpha$ jeweils größer als der Winkel $\beta$. Die Querschnittsfläche A am Eintritt der von innen nach außen strömenden Flüssigkeit bei geöffnetem Ventil und vorhandenem Dichtungsspalt 6 ist gleich oder größer als die Querschnittsfläche A am in Strömungsrichtung gesehen Ende des Dichtungsspaltes 6. Entsprechend ist die innere Höhe HI größer als die äußere Höhe HA des Dichtungsspaltes 6. Anhand der oben dargestellten Formeln läßt sich jeweils die innere Querschnittsfläche AE oder die äußere Querschnittsfläche AA berechnen. Figur 2 zeigt eine mögliche Änderung der Geometrie am Ventilsitz zur Realisierung der Erfindung. Die in Figur 2 dargestellte punktierte Linie mit der Höhe Y0 stellt eine Ausführung entsprechend dem Stand der Technik mit $\alpha = \beta$ dar. Diese Ausführung beinhaltet den Ventilsitz der flächig am Ventilteller 3 anliegt. Die schraffierte Fläche bzw. Form des Ventilkörpers 1 ist entsprechend der Erfindung angepaßt. Die Abdichtung des Ventils wird in diesem Fall durch die äußere Spitze des Ventilkörpers 1 in Verbindung mit dem Ventilteller 3 bewirkt. Der Kegelwinkel $\beta$ bzw. $\beta/2$ ist jeweils für eine Geometrie entsprechend dem Stand der Technik ($\alpha = \beta$) und für eine Geometrie entsprechend der Erfindung mit ($\alpha > \beta$) dargestellt. Somit ist gewährleistet, daß bei einer Strömungsrichtung der Flüssigkeit von innen nach außen keine Vergrößerung der Dichtungsspaltfläche mit zunehmendem Radius auftritt. Die bisher beschriebene Darstellung kann in analoger Weise auch für ein Ventil angestellt werden, bei dem die Flüssigkeit von außen nach innen strömt. Die Geometrie müßte in analoger Weise relativ zum Stand der Technik geändert werden. Ein derartiges Ventil wäre kein Zerstäubungsventil, sondern beispielsweise ein Absteuerventil zur Beherrschung eines Ventilöffnungsvorganges bei sehr hohen anliegenden Drücken.

**Patentansprüche**

1. Tellerventil zur Dosierung von Flüssigkeiten bestehend aus:

   - einem Ventilkörper (1) mit einem Ventilsitz (4),
   - einem mit einer Ventilnadel (2) verbundenen Ventilteller (3), der mit dem Ventilsitz außen dichtend korrespondiert,
   - wobei der Ventilteller (3) im geschlossenen Zustand in Form einer Dichtlinie am Ventilsitz (4) anliegt und im geöffneten Zustand im Bereich vor der Dichtlinie ein mit Fluid gefüllter Spalt gebildet ist, der in Strömungsrichtung eine konstante oder abnehmende Strömungsquerschnittsfläche aufweist.

2. Tellerventil nach Anspruch 1, wobei die Strömungsrichtung der Flüssigkeit von innen nach außen gerichtet ist.

3. Tellerventil nach einem der vorhergehenden Ansprüche, wobei das Tellerventil als Kegelstrahlventil ausgebildet ist.

**Claims**

1. Poppet valve for dosing fluids, comprising:

   - a valve body (1) with a valve seat (4),
   - a valve disk (3) connected to a valve needle (2) and corresponding to the valve seat in an externally sealing manner,
   - the valve disk (3) bearing against the valve seat (4) in the closed state in the form of a sealing contour and, in the open state, a fluid-filled gap being formed in the in the region upstream of the sealing contour and having a constant or decreasing flow cross sectional area in the flow direction.

2. Poppet valve according to Claim 1, wherein the flow direction of the fluid is from inside to outside.

3. Poppet valve according to one of the preceding Claims, wherein the poppet valve is implemented as a conical jet valve.

**Revendications**

1. Soupape à disque pour le dosage de liquides, constituée de:

   - un corps de soupape (1) comportant un siège de soupape (4),
   - un disque de soupape (3), lié à une aiguille de soupape (2), ce disque correspondant au siège de soupape en assurant extérieurement l'étanchéité,
   - le disque soupape (3) étant en contact, en position de fermeture, sous la forme d'une ligne d'étanchéité sur le siège de soupape (4) et, en position d'ouverture, un interstice rempli de fluide étant réalisé pour, dans la direction d'écoulement, présenter une surface de section d'écoulement constante ou diminuante.

2. Soupape à disque suivant la revendication 1, le sens d'écoulement du liquide étant dirigé de l'intérieur vers l'extérieur.

3. Soupape à disque suivant l'une des revendications précédentes, la soupape à disque étant réalisée sous la forme d'une soupape à écoulement conique.

## FIG 1

$D_{außen}$

$D_{innen}$

$\alpha > \beta$

2

1

3

HA

HI

6

$\alpha$

$\beta$

## FIG 2

$\alpha > \beta$

1

B/2 mit $\alpha > \beta$

B/2 mit $\alpha = \beta$

y1

y0

4

FIG 3

$\alpha = \beta$

FIG 4

$\alpha = \beta$